# EUROPEAN PATENT SPECIFICATION

(11) **EP 1 379 394 B1**
(45) Date of publication and mention of the grant of the patent: **19.01.2005**
(21) Application number: 02779688.7
(22) Date of filing: 15.11.2002
(51) Int. Cl.: B41N 1/22, B41F 13/10, B29D 31/00, B29C 70/68, C23C 4/08

(54) **PRINTING CYLINDER MANUFACTURE**
HERSTELLUNG VON DRUCKZYLINDERN
PRODUCTION DE CYLINDRES D'IMPRESSION

(30) Priority: 28.11.2001 GB 0128469
(43) Date of publication of application: 14.01.2004
(73) Proprietor: Starbase AG, 3358 Bleienbach (CH)
(72) Inventor: KEATING, Michael, Chester, Cheshire CH2 3HA (GB)
(74) Representative: Appleton, Ben
(86) International application number: PCT/GB2002/005172
(87) International publication number: WO 2003/047873

(56) References cited:
- EP-A- 0 038 385
- EP-A- 0 384 104
- DE-A- 19 633 643
- FR-A- 1 096 294
- US-A- 3 502 768
- US-A- 5 468 568
- PATENT ABSTRACTS OF JAPAN vol. 017, no. 229 (M-1406), 11 May 1993 (1993-05-11) & JP 04 358825 A (BANDO CHEM IND LTD), 11 December 1992 (1992-12-11)

## Description

### Field of the Invention

This invention relates to apparatus and methods for manufacturing printing cylinder precursors, methods of manufacturing printing cylinders, printing cylinder precursors and printing cylinders per se.

### Background to the Invention

Printing cylinder precursors may be manufactured from a variety of materials including metals and plastics materials. Metal printing cylinders, such as aluminium printing cylinders display some advantageous characteristics such as strength and toughness, but can be expensive to manufacture and once damaged, difficult to repair. Plastics cylinders on the other hand, are cheap to manufacture and any defects caused by damage or through the manufacturing process, can usually be repaired easily and cheaply.

There are many methods of manufacturing plastics printing cylinders. One known method is injection moulding of a curable plastics monomer into a cylinder vessel, the monomer being cured to produce a solid plastics cylinder which must then be bored to provide anchor points for connection to a suitable printing apparatus. The need to bore the solid cylinder in a separate apparatus, and the subsequent loss of the bored materials makes this method relatively expensive.

Another known method of forming a printing cylinder precursor is to spin a plastics fibre outer cylinder coating and build up sufficient layers to form the precursor. The use of fibre spinning technology is again relatively expensive, and only certain plastics materials have the inherent physical properties necessary for spinning into fibres and coatings.

A third known method of forming a printing cylinder precursor, particularly a gravure printing cylinder precursor is described in US 4197798, which describes preparing a plastics cylinder by pouring polypropylene into a mould of the desired shape which includes a tapered plug for providing a keyway shafting bore. The tapered plug allows the production of a bore which gives purchase to connection means of a printing apparatus to which a printing cylinder formed from the precursor, is connected. As the cylinder precursor is entirely constructed from plastics, special techniques are needed for enabling copper, or other metal plating, of the precursor to form the final cylinder, as there is no electrically conductive surface present within or on the precursor.

WO-A- 00/59 727 discloses a plastic cylinder having a spine through the cylinder. However, the spine is not unmovable.

It is therefore an aim of preferred embodiments of the present invention to overcome or mitigate at least one problem of the prior art, whether expressly disclosed herein or not.

### Summary of the Invention

According to a first aspect of the invention there is provided a gravure printing cylinder precursor comprising a plastics cylinder in which is located an immovable spine, the plastics cylinder being moulded around the spine, wherein at least a portion of the exterior surface of the spine comprises an adhesive means, which in use, enables the plastics cylinder to adhere to the spine.

Preferably the spine comprises a cylindrical member, more preferably a hollow cylindrical member. Suitably the hollow member is open at both ends of the member.

Preferably the spine comprises an end member at each end of the spine, wherein at least a portion of each end member has a diameter greater than that of the spine. Suitably the end members comprise a substantially frusto-conical shape or a trumpet shape, tapering inwards towards the spine.

The end members may be formed integrally with the spine, but preferably the end members are connected to the spine, and more preferably are detachably connected to the spine.

Preferably the end members are hollow.

Preferably the spine is constructed from metal (including an alloy), more preferably steel, aluminium, bronze or combinations thereof. In a particularly useful embodiment of the invention, the spine is constructed from steel and comprises end members constructed from bronze.

The spine may alternatively be constructed from plastics material or a composite material, such as woven or spun glass fibre material.

The spine may be manufactured by any suitable method, such as die casting, for example.

In alternative embodiments of the invention the spine may comprise an existing printing cylinder precursor or printing cylinder *per se*.

Preferably the outer diameter of the spine has a variance of no more than 10µm along substantially the length of the spine, preferably no more than 5µm.

The plastics cylinder suitably comprises polyurethane.

Suitably the thickness of the cylinder wall is at least 5mm, preferably at least 10mm and more preferably at least 15mm. In particularly preferred embodiments the thickness of the cylinder wall is at least 20mm.

Suitably the adhesion means comprises a roughened portion of the spine. Roughening of the spine may be effected by any suitable method, such as rubbing with an abrasive material, or, if the spine is metal, electrograining the surface of the spine.

It has been found that by only providing the spine with adhesion means on certain sections of the spine, optimal adhesion and uniform stress distribution can be achieved for the printing cylinder precursor. Thus preferably the spine comprises adhesion means on portions of the surface of the spine adjacent to either end of the spine and optionally, substantially centrally on the spine.

Suitably each of the three portions extends for substantially 10% of the length of the spine. The adhesion means on the surface of the spine adjacent to either end of the spine may further cover at least a portion of the end members of the spine.

Suitably the surface of the spine comprises, in regions not comprising adhesion means, a release agent, arranged in use to prevent adhesion of the plastics cylinder to the spine in said regions. Suitable release agents include R525B Bulk Release Agent and Acmos 82-2405 sold by ECL Chemicals Limited, UK.

During subsequent plating of the printing cylinder precursor with copper (or other metal) to produce a gravure cylinder, it has been found by the applicant that the heat generated during the plating process may sometimes expand the spine in diameter at both ends by an unacceptable amount (generally 750 µm), which pushes the plastics cylinder out. When the plating process is finished the spine may cool down and contract to its original size but the plastics cylinder may not, the result being an increase in diameter of the plastics cylinder at the cylinder ends.

To overcome this disadvantage, preferably the spine comprises a compressible material on at least a portion of the surface of the spine. Suitably the compressible material is located in the region of either or both end(s) of the spine, and may be located on a portion of the spine substantially midway along the spine. Suitably the compressible material also functions as the adhesion means, and preferably is located as described hereinabove for the adhesion means.

Suitably the compressible material comprises bitumen or polymerised bitumen.

Preferably the compressible material has a thickness of at least 100µm, more preferably at least 200µm and most preferably at least 300µm. In a particularly preferred embodiment of the invention, the compressible material has a thickness of substantially 500µm.

The compressible material may be laminated with one or more layers of aluminium foil, suitably substantially 20µm in thickness. The aluminium foil may be overlaid with one or more layers of polyester, preferably between substantially 15µm and substantially 20µm in thickness. The aluminium and/or polyester layers are suitably roughened or otherwise treated, to function as the adhesion means of the spine.

An advantage of a printing cylinder precursor of the invention, comprising a plastics cylinder in which is located an immovable spine, is the property that the cylinder can be turned down to a different diameter by a printer if desired. The printer may turn down the precursor *per se* or turn down a printing cylinder produced from the precursor, thus recycling the cylinder and/or precursor, savings costs, resources and time. The immovable spine allows the plastics cylinder to be turned down by providing strength against the pressure involved in the turning process, alleviating pressure on the plastics cylinder, thus reducing the likelihood of cracking or shearing of the cylinder. The precursor and/or printing cylinder produced therefrom, may also be cast up to a larger size, again allowing printers to recycle precursors and cylinders.

A second advantage of utilising an immovable spine within the plastics cylinder is that the increased strength effected by the spine allows precursors of much greater length to be manufactured, as would otherwise be possible without a spine. During the manufacturing process, an immovable spine allows adhesion of the plastics material of the cylinder so that the cylinder is prevented from flexing or bending axially when removed from the manufacturing apparatus, thus preventing possible cracking or shearing of the plastics material.

A conductive metal spine also provides, an electrically conductive surface which can be utilised to electroplate the surface of the precursor to form a gravure printing cylinder.

According to a second aspect of the invention there is provided a gravure printing cylinder comprising a printing cylinder precursor of the first aspect of the invention, on which is coated a deformable layer of metal (including alloy).

The deformable layer of metal is thus suitable for etching by conventional gravure printing methods.

Suitably the metal layer is copper.

Preferably the gravure printing cylinder comprises a conductive metal layer between the precursor surface and the deformable metal layer. Suitable conductive metals include nickel and conductive alloys thereof, for example.

The printing cylinder precursor may be manufactured in a moulding apparatus for manufacturing a printing cylinder precursor, comprising a cylindrical moulding vessel comprising an inlet for the ingress of moulding material, the vessel further comprising a removable spine located centrally within the moulding vessel.

Preferably the vessel comprises air egress means, which may comprise an air outlet. Suitably there are a plurality of air egress means.

The vessel preferably comprises moulding material egress means, which may comprise a moulding material outlet. Preferably there are a plurality of moulding material egress means.

In an especially preferred embodiment, the air egress means and the moulding material egress means are the same means.

Suitably the vessel comprises a spine locating member, arranged in use to enable location of the spine substantially centrally within the vessel. Preferably the spine locating member comprises an elongate member extending between both ends of the cylinder through the central axis of the cylinder. The elongate member may comprise a bar or rod, and is preferably a threaded bar or rod.

The moulding vessel preferably comprises a bottom plate and a top plate spaced apart by way of a continuous side wall, and wherein at least one of the top plate and bottom plate is removably connected to the side wall.

Suitably the air egress means is located in the top plate. Preferably the moulding material egress means is located in the top plate.

Suitably the spine locating member is fixedly connected to one of the top plate or bottom plate, preferably the bottom plate.

At least one of the top plate and bottom plate may comprise a spine connecting member, arranged in use to cooperate with a corresponding connecting member on the spine. Preferably the spine connecting member comprises a male connection member which protrudes into the vessel from the top plate and/or bottom plate, and is cooperable with a female connection member of the spine. Most preferably the spine connecting member comprises a spigot which, is cooperable with a female connection member of the spine in the form of a recess.

Suitably the spine is as described for the first aspect of the invention.

The end members preferably comprise a moulding vessel connecting member, arranged in use to operably cooperate with a corresponding spine connecting member on the moulding vessel.

Preferably the interior surface of the moulding vessel is substantially smooth, and is more preferably coated with a release agent which, in use, prevents moulding material adhering to the interior surface at the mould. Suitable release agents include R525B Bulk Release Agent and Acmos-82-2405 sold by ECL Chemicals Limited, UK.

Preferably at least a portion of the exterior surface of the spine is roughened to form a key for adhesion of moulding material injected into the moulding vessel, in use of the moulding apparatus. The exterior surface of the spine may be roughened by any suitable method, such as rubbing with an abrasive material, such as emery paper, for example. If the spine is composed of a metal, roughening of the spine may be effected by electrogaining the surface of the spine.

According to a third aspect of the present invention there is provided a method of manufacturing a plastics printing cylinder precursor, the method comprising applying a plastics material to a spine such that the spine is immovably fixed within the plastics material of the cylinder precursor.

The plastics material may be applied to the spine by any suitable method, such as spin coating, injection moulding, or placing the spine in a cylindrical moulding vessel and introducing plastics moulding material to the vessel, before hardening of the material, for example.

Suitably, the spine and plastics material are as described for the first aspect of the invention.

According to a fourth aspect of the invention there is provided a method of manufacturing a plastics printing cylinder precursor of the first aspect of the invention, method comprising the steps of:
(a) providing a moulding apparatus comprising a cylindrical moulding vessel comprising an inlet for the ingress of moulding material, the vessel further comprising a removable centrally located spine within the vessel;
(b) effecting passage of a moulding material through the inlet to substantially fill the moulding vessel with moulding material;
(c) effecting hardening of the moulding material within the vessel such that the moulding material hardens around the centrally located spine; and
(d) removing the cylinder precursor comprising the hardened moulding material and spine.

The moulding vessel may comprise air egress means, and the method may comprise effecting egress of air through the air egress means as the vessel is filled with moulding material.

The moulding vessel may comprise moulding material egress means, and the method may comprise overfilling the vessel with moulding material such that a portion of the moulding material is ejected through the moulding material egress means in order to ensure complete filling of the vessel.

Preferably the moulding vessel, spine, air egress means and moulding material egress means are as described for the first aspect and hereinabove.

Suitably the moulding material comprises a heat curable material, a radiation curable material or a heat and radiation curable material.

Suitable moulding materials include plastics materials, such as polyurethane, for example. Examples of suitable polyurethane materials include slow reacting, water blown polyurethane foam or carbon dioxide (CO₂) blown MDI based foam. The moulding material may also comprise the plastics material of the fourth aspect of the invention.

The method preferably comprises, after step (d), turning the cylinder precursor to remove any flaws in the outer surface of the precursor.

The method may comprise, after step (d), turning the cylinder precursor to reduce the diameter of the cylinder precursor in order to allow subsequent coating of the precursor to its initial cylindrical diameter.

According to a fifth aspect of the present invention there is provided a printing cylinder precursor manufactured by the method of the third or fourth aspect of the invention.

According to a sixth aspect of the present invention there is provided a method of manufacturing a gravure printing cylinder from a precursor of the fifth aspect of the invention, the method comprising the steps of:
(a) coating the precursor with a conductive metal (including alloy); and
(b) plating the metal-coated cylinder precursor with a deformable metal.

Suitably the deformable metal is copper.

Preferably step (a) comprises applying a coating of electroconductive paint, which may be applied by brushing, rollering, spraying, dip-coating or doctor-blading the precursor with the electroconductive paint. Suitably the paint is electroconductive nickel-based paint.

Alternatively step (a) may comprise electrodepositing a coating of conductive metal, such as nickel or copper for example.

Step (a) may comprise spinning a coating of copper tape or film onto the surface of the precursor.

Step (a) may comprise adhering a copper sheet to the precursor using any suitable adhesive.

Step (a) may comprise spraying a coating of molten metal onto the precursor.

Step (b) preferably comprises electrodeposition of copper from a copper salt. Suitably the copper salt is an aqueous solution of copper salt and is preferably an aqueous solution of copper sulphate.

Step (b) may comprise immersing the precursor in an aqueous solution of copper salt and effecting an electronic current through the electroconductive coating of the precursor.

According to a seventh aspect of the invention there is provide a gravure printing cylinder produced by the method of the sixth aspect of the invention.

### Brief Description of the Drawings

For a better understanding of the various aspects of the invention, and to show how embodiments of the same may be put into effect, the invention will now be described by way of example, with reference to the accompanying drawings, in which:
Figure 1 illustrates a side cross-sectional view through a moulding apparatus of the invention, with the removable spine located centrally within the vessel;
Figure 2 illustrates a blown up perspective view of the moulding vessel of the moulding apparatus of Figure 1;
Figure 3 illustrates a side view of the spine of the moulding apparatus of Figure 1;
Figure 4 illustrates a blown-up perspective view of a portion of the spine of Figure 3, showing an end member and part of the spine;
Figure 5 illustrates a spine of a second embodiment of the moulding apparatus of Figure 1;
Figure 6 illustrates a side cross-sectional view of a printing cylinder precursor, of the invention produced in the moulding vessel of Figure 1; and
Figure 7 illustrates a side cross-sectional view of a gravure printing cylinder of the invention manufactured from the printing cylinder precursor of Figure 5.

### Description of the Preferred Embodiments

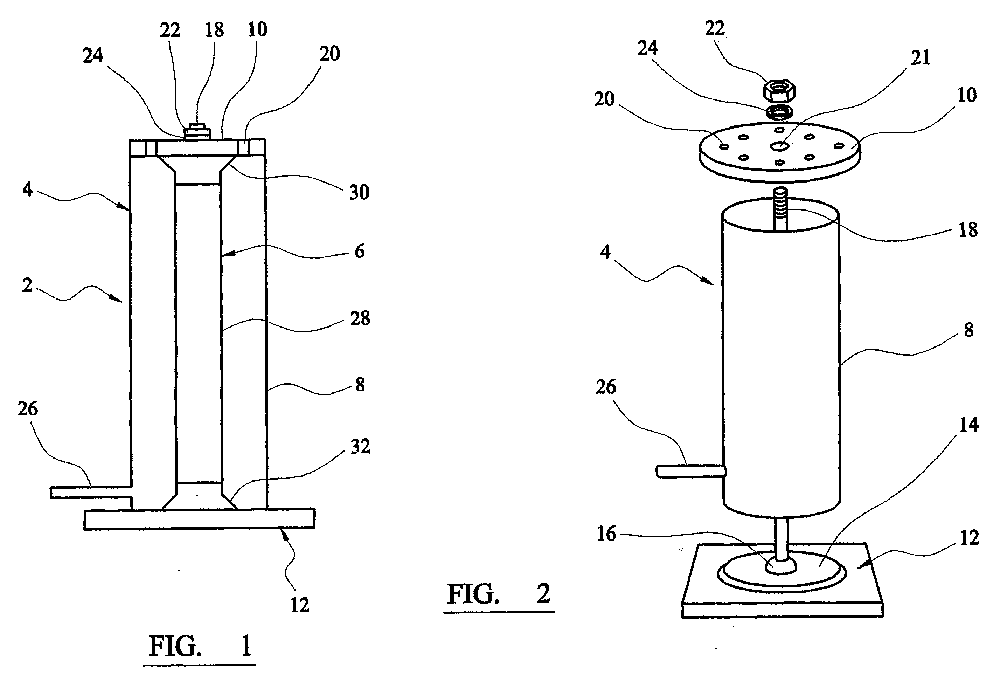

Referring firstly to Figure 1, 2 and 3 a moulding apparatus 2 of the invention comprises a moulding vessel 4, and a removable hollow spine 6.

As illustrated in Figure 2, the moulding vessel 4 comprises a cylindrical side wall 8 and top 10 and bottom 12 plates which are removably attached to the side wall 8. The bottom plate 12 includes a central locating collar 14 dimensioned to connect to one end of the side wall 8. At the centre of the locating collar there is provided a raised spigot 16. The raised spigot 16 is substantially semi-circular in shape, with the circumference of the spigot nearest the collar 14 being substantially equal to the inner circumference of the spine 6, to provide a tight seal when the spine 6 is mounted on the spigot 16. Extending from the centre of the spigot is a spine locating member in the form of an elongate shaft 18 which is threaded at its free end.

The top plate 10 includes air egress means and moulding material egress means in the form of apertures 20 which perform both functions. The top plate 10 also includes connection aperture 21 which, in use is arranged to be located over the free end of the elongate shaft 18.

The side wall 8 also includes a moulding material ingress means in the form of an inlet 26 located towards the end of the side wall 8 which in use is mounted on the bottom plate 12.

Referring now to Figures 1, 3 and 4, the removable spine 6 comprises a spine body 28, to which are connected at either end thereof, first 30 and second 32 end members having a substantially trumpet shape. Each of the spine body 28 and first 30 and second 32 end members are hollow, having a bore 34 running therethrough.

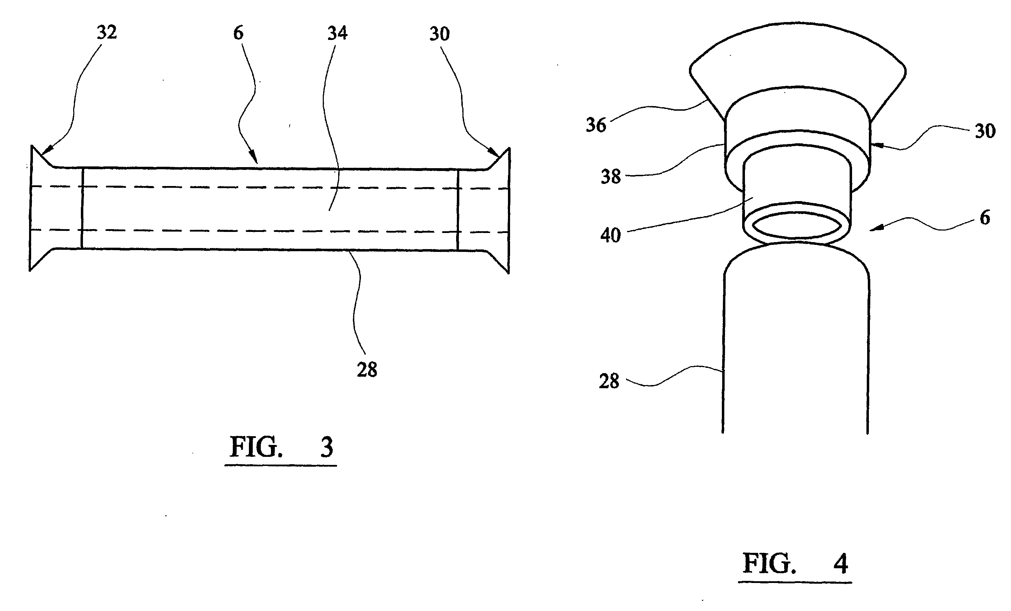

Referring to Figure 4, the end members 30 and 32 comprise a distal frusto-conical portion 36 and a proximal shoulder portion 38 which is disc-shaped. Extending from the shoulder portion 38 is an end member connection means in the form of a hollow spigot 40, which in use is arranged to fit into the bore 34 at one end of the spine body 28 until the shoulder portion 38 of the end member 30 or 32 abuts the end of the spine body 28.

The spigot 40 is dimensioned to provide a tight seal with the bore 34 of the spine body 28.

Use of the apparatus will now be described with reference to Figures 1, 2, 3 and 4.

The top plate 10 of the vessel 4 is removed by first removing the nut 22 and washer 24 from the elongate shaft 18 and lifting off the plate 10. The spine 6 is then lowered over the elongate shaft 18 such that the shaft 18 is within the bore 34 of the spine 6. The spine 6 is lowered into the vessel 4 such that the end member 32 is arranged to sealingly fit over the raised spigot 16 in order to secure the spine 6 to the bottom plate 12 of the vessel 4 as illustrated in Figure 1. The spigot 16 and/or end member 32 may include 'O'-rings which effect a tight seal between the two components.

When the spine 6 is in position in the vessel 4, the top plate 10 is fitted back onto the top of the vessel 4 and the nut 22 and washer 24 screwed onto the elongate shaft 18 and tightened to ensure that the top plate 10 is sealed to the vessel 4.

Curable moulding material, such as polyurethane foam is then injected into the vessel 4 through the inlet 26. As the moulding material enters the vessel 4, it displaces air within the vessel 4 which is forced out of the vessel 4 through the apertures 20. The vessel 4 is slightly overfilled with moulding material such that some moulding material is forced out of the vessel 4 through the apertures 20, in order to ensure complete filling of the vessel 4.

As the spine 6 is sealed to both the top 10 and bottom 12 plates of the vessel 4, no moulding material may enter the spine 6 and thus the moulding material is forced to encase the spine 6.

The moulding material is then cured and the vessel allowed to stand for a minimum of 2 hours to ensure complete curing of the material. The curing technique and standing time will vary depending on the moulding material, but will be well known to persons skilled in the art.

When the moulding material is completely set, the nut 22 and washer 24 are unscrewed and removed from the elongate shaft 18 and the top plate 20 removed from the vessel 4.

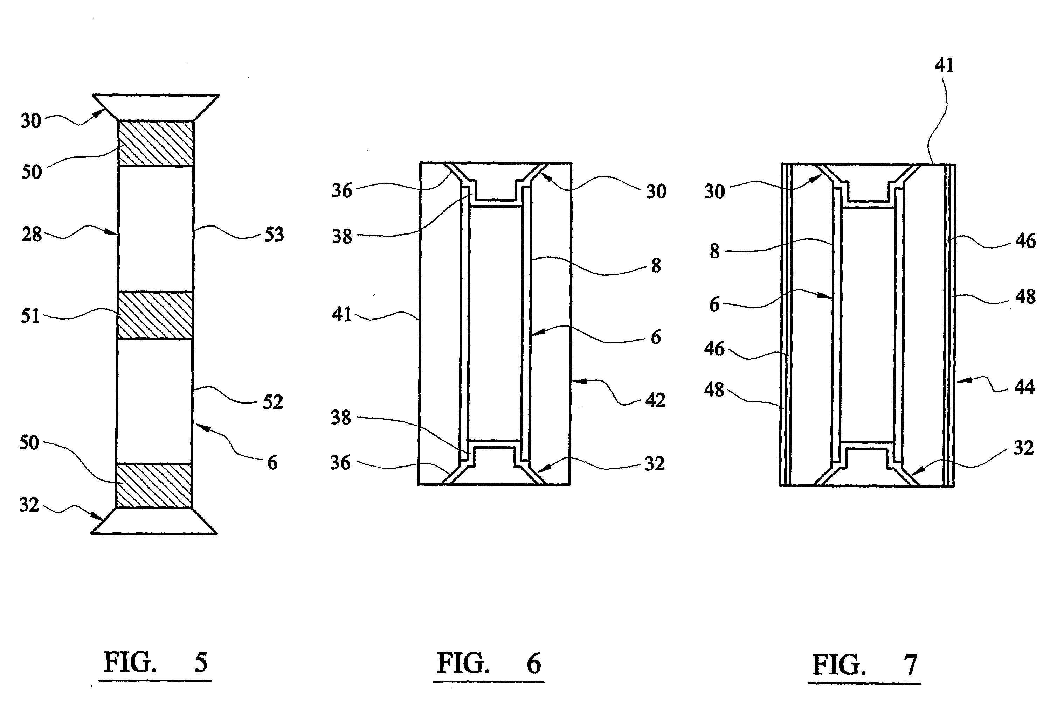

The spine 6 which is now immovably encased by a cylinder of cured plastics material 41 as shown in Figure 5, is then withdrawn from the vessel 6. The plastics encased spine forms a printing cylinder precursor 42 of the invention, having an immovable spine.

The printing cylinder precursor is then allowed to stand at ambient temperature for a minimum of 72 hours to stabilize the cured moulding material.

The frusto-conical portion 36 of each end member 30 and 32 has a diameter greater than that of the shoulder portions 38 and serves to allow attachment of the cylinder precursor 42 to apparatus having varying sized cylinder connection means (not shown).

The diameter of the precursor 42 is then lowered by shaving off a layer of the cured moulding material 41, in order that subsequent coating and plating does not increase the diameter of the precursor 42 beyond its original diameter.

The precursor 42 is then coated with a conductive metal by blade coating, spraying or hand brushing an electroductive nickel based paint, to form a conductive coating on the cylinder precursor 41 surface, as illustrated in Figure 6.

To manufacture a printing cylinder 44 as shown in Figure 6, a layer of copper plating 48 is deposited on the conductive nickel layer 46 by electrodeposition from an aqueous solution of copper sulphate. To copper plate the precursor 41, a conductive shaft is passed through the spine 6 which makes electrical contact with the surface of the conductive bore 34 or conductive end members 30 or 32.

Rubber seals are then placed over the end members 30 and 32 to prevent any solution entering the bore 34. The spine 6 is then lowered into a vessel of copper sulphate. solution and an electrical current is passed down the shaft within the bore which passes through the spine 6 onto the conductive coating 46. Copper is then deposited onto the conductive coating 46 to form a copper plate layer 48 on the surface thereof, as shown in Figure 6.

The current is initially low [approx 2-5 A/dm²] and is increased once a thin layer of copper plate has formed on the conductive surface 46 to a maximum current of 20 A/dm².

The printing cylinder 44 is then removed from the copper solution, dried and cleaned, ready for use as a gravure printing cylinder of the invention, for example.

We refer now to Figure 5. In an alternative embodiment of the moulding apparatus of the invention, and a printing plate precursor of the invention the spine 6 may include compressible portions 50 and 51, located around the surface of the spine 6, at either end of the spine adjacent to the end members 30 and 32, and substantially centrally round the spine. The compressible areas 50 and 51 may be formed of bitumen, and are laminated with layers of aluminium and polyester, the latter of which is roughened to provide an adhesion means for the polyurethane cylinder to adhere to.

The compressible portions 50 and 51 allow the spine to expand and contract during plating without causing the polyurethane cylinder to expand, and thus prevents loosening and cracking of the cylinder during plating.

The surface areas 52 and 55 of the spine adjacent to the compressible portions which do not comprise compressible material are coated in a release agent to prevent adhesion by the polyurethane cylinder. This allows for a more uniform pressure to be exerted on the spine during plating, and prevents expansion of the spine and cylinder adjacent to and on the end members 30 and 32.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A gravure printing cylinder precursor comprising a plastics cylinder in which is located an immovable spine, the plastics cylinder being moulded around the spine, wherein at least a portion of the exterior surface of the spine comprises an adhesive means, which in use, enables the plastics cylinder to adhere to the spine.

2. A precursor as claimed in Claim 1, wherein the spine comprises an end member at each end of the spine, and at least a portion of each end member has a diameter greater than that of the spine.

3. A precursor as claimed in Claim 2, wherein the end members are detachably connected to the spine.

4. A precursor as claimed in any preceding claim, wherein the spine is constructed from metal.

5. A precursor as claimed in any one of Claims 1 to 4, wherein the spine is an existing printing cylinder precursor or printing cylinder *per se.*

6. A precursor as claimed in any preceding claim, wherein the spine comprises a compressible material on at least a portion of the surface of the spine.

7. A precursor as claimed in any preceding claim wherein the plastics cylinder comprises polyurethane.

8. A gravure printing cylinder comprising a printing cylinder precursor as claimed in any one of Claims 1 to 7, on which is coated a deformable layer of metal.

9. A printing cylinder as claimed in Claim 8, comprising a conductive metal layer between the precursor surface and the deformable metal layer.

10. A method of manufacturing the plastics gravure printing cylinder precursor as defined in Claim 1, the method comprising applying a plastics material to a spine such that the spine is immovably fixed within the plastics material of the cylinder precursor.

11. A method of manufacturing the plastics gravure printing cylinder precursor as defined in Claim 1, the method comprising the steps of:
(a) providing a moulding apparatus comprising a cylindrical moulding vessel comprising an inlet for the ingress of moulding material, the vessel further comprising a removable centrally located spine within the vessel;
(b) effecting passage of a moulding material through the inlet to substantially fill the moulding vessel with moulding material;
(c) effecting hardening of the moulding material within the vessel such that the moulding material hardens to form a plastics cylinder around the centrally located spine; and
(d) removing the cylinder precursor comprising the hardened moulding material and spine.

12. A method as claimed in Claim 11, wherein the moulding vessel comprises moulding material egress means, and the method comprises overfilling the vessel with moulding material such that a portion of the moulding material is ejected through the moulding material egress means in order to ensure complete filling of the vessel.

13. A method as claimed in Claim 12, wherein the moulding material comprises polyurethane.

14. A method of manufacturing a gravure printing cylinder from a precursor of any one of claims 1 to 7, the method comprising the steps of:
(a) coating the precursor with a conductive metal; and
(b) plating the metal-coated cylinder precursor with a deformable metal.

## Patentansprüche

1. Tiefdruckzylindervorläufer, umfassend einen Kunststoffzylinder, in dem ein unbeweglicher Dom festgelegt ist, wobei der Kunststoffzylinder um den Dorn geformt ist und wenigstens ein Teil der Außenfläche des Dorns ein Haftmittel aufweist, das es in Funktion dem Kunststoffzylinder ermöglicht, an dem Dom zu haften.

2. Vorläufer nach Anspruch 1, wobei der Dom ein Endelement an jedem Ende des Doms umfasst und wenigstens ein Teil jedes Endelementes einen Durchmesser hat, der größer als derjenige des Doms ist.

3. Vorläufer nach Anspruch 2, wobei die Endelemente mit dem Dom lösbar verbunden sind.

4. Vorläufer nach einem der vorhergehenden Ansprüche, wobei der Dom aus Metall hergestellt ist.

5. Vorläufer nach einem der Ansprüche 1 bis 4, wobei der Dom ein vorhandener Druckzylindervorläufer oder ein Druckzylinder an sich ist.

6. Vorläufer nach einem der vorhergehenden Ansprüche, wobei der Dom auf wenigstens einem Teil der Oberfläche des Doms ein zusammendrückbares Material aufweist.

7. Vorläufer nach einem der vorhergehenden Ansprüche, wobei der Kunststoffzylinder Polyurethan umfasst.

8. Tiefdruckzylinder, umfassend einen Druckzylindervorläufer nach einem der Ansprüche 1 bis 7, auf dem eine verformbare Metallschicht aufgebracht ist.

9. Druckzylinder nach Anspruch 8, umfassend eine leitende Metallschicht zwischen der Vorläuferoberfläche und der verformbaren Metallschicht.

10. Verfahren zur Herstellung des Kunststoff-Tiefdruckzylindervorläufers nach Anspruch 1, wobei das Verfahren Auftragen eines Kunststoffmaterials auf den Dorn derart umfasst, dass der Dorn innerhalb des Kunststoffmaterials des Zylindervorläufers unbeweglich fixiert ist.

11. Verfahren zur Herstellung des Kunststoff-Tiefdruckzylindervorläufers nach Anspruch 1, umfassend die Schritte:
(a) Vorsehen einer Formvorrichtung, die einen zylindrischen Formbehälter umfasst, der einen Einlass für den Eintritt von Formmaterial umfasst, wobei der Behälter femer einen entfernbaren zentralen Dom innerhalb des Behälters umfasst;
(b) Bewirken von Durchtritt eines Formmaterials durch den Einlass, um dem Formbehälter mit Formmaterial im Wesentlichen zu füllen;
(c) Bewirken des Härtens des Formmaterials innerhalb des Behälters derart, dass das Formmaterial härtet zur Bildung eines Kunststoffzylinders um den zentralen Dom; und
(d) Entfemen des Zylindervorläufers bestehend aus dem gehärteten Formmaterial und dem Dom.

12. Verfahren nach Anspruch 11, wobei der Formbehälter eine Formmaterial-Austrittseinrichtung umfasst und das Verfahren umfasst: Überfüllen des Behälters mit Formmaterial derart, dass ein Teil des Formmaterials durch die Formmaterial-Austrittseinrichtung ausgestoßen wird, um ein vollständiges Füllen des Behälters sicherzustellen.

13. Verfahren nach Anspruch 12, wobei das Formmaterial Polyurethan umfasst.

14. Verfahren zur Herstellung eines Tiefdruckzylinders aus einem Vorläufer nach einem der Ansprüche 1 bis 7, wobei das Verfahren die folgenden Schritte umfasst:
(a) Beschichten des Vorläufers mit einem leitenden Material; und
(b) Plattieren des mit Metall beschichteten Zylindervorläufers mit einem verformbaren Metall.

## Revendications

1. Précurseur de cylindre d'héliogravure comprenant un cylindre en plastique à l'intérieur duquel est placé une colonne fixe, le cylindre en plastique étant moulé autour de la colonne, dans lequel au moins une partie de la surface extérieure de la colonne comprend des moyens adhésifs qui permettent, lors de l'utilisation, au cylindre en plastique d'adhérer à la colonne.

2. Précurseur selon la revendication 1, dans lequel la colonne comprend un élément d'extrémité à chaque extrémité de la colonne, et au moins une partie de chaque élément d'extrémité présente un diamètre supérieur à celui de la colonne.

3. Précurseur selon la revendication 2, dans lequel les éléments d'extrémité sont reliés de façon détachable à la colonne.

4. Précurseur selon une quelconque revendication précédente, dans lequel la colonne est en métal.

5. Précurseur selon une quelconque des revendications 1 à 4, dans lequel la colonne est un précurseur de cylindre d'héliogravure existant ou un cylindre d'impression en soi.

6. Précurseur selon une quelconque revendication précédente, dans lequel la colonne comprend un matériau compressible sur au moins une partie de la surface de la colonne.

7. Précurseur selon une quelconque revendication précédente, dans lequel le cylindre en plastique comprend du polyuréthane.

8. Cylindre d'héliogravure comprenant un précurseur de cylindre d'impression selon une quelconque des revendications 1 à 7, sur lequel est appliquée une couche déformable de métal.

9. Cylindre d'impression selon la revendication 8, comprenant une couche de métal conducteur entre la surface du précurseur et la couche de métal déformable.

10. Procédé de fabrication du précurseur de cylindre en plastique d'héliogravure selon la revendication 1, le procédé comprenant l'application d'un matériau plastique sur une colonne, de sorte que la colonne est fixée de façon inamovible dans le matériau plastique du précurseur de cylindre.

11. Procédé de fabrication du précurseur de cylindre en plastique d'héliogravure selon la revendication 1, le procédé comprenant les étapes suivantes :
(a) fourniture d'un appareil de moulage comprenant une cuve cylindrique de moulage comprenant une arrivée pour l'admission de matériau de moulage, la cuve comprenant en outre une colonne amovible située centralement dans la cuve ;
(b) réalisation du passage d'un matériau de moulage via l'arrivée afin de remplir sensiblement la cuve de moulage de matériau de moulage ;
(c) réalisation du durcissement du matériau de moulage dans la cuve, de sorte que le matériau de moulage durcit et forme un cylindre en plastique autour de la colonne positionnée centralement ; et
(d) retrait du précurseur de cylindre comprenant le matériau de moulage durci et la colonne.

12. Procédé selon la revendication 11, dans lequel la cuve de moulage comprend des moyens d'échappement du matériau de moulage, et le procédé comprend le remplissage excédentaire de la cuve en matériau de moulage, de sorte qu'une partie du matériau de moulage est éjectée via les moyens d'échappement de matériau de moulage, afin de garantir le remplissage complet de la cuve.

13. Procédé selon la revendication 12, dans lequel le matériau de moulage comprend du polyuréthane.

14. Procédé de fabrication d'un cylindre d'héliogravure à partir d'un précurseur de l'une quelconque des revendications 1 à 7, le procédé comprenant les étapes suivantes :
(a) application d'une couche de métal conducteur sur le précurseur ; et
(b) galvanisation du précurseur de cylindre recouvert de métal avec un métal déformable.
